# EUROPEAN PATENT SPECIFICATION

(11) **EP 4 550 255 B1**
(45) Date of publication and mention of the grant of the patent: **06.05.2026**
(21) Application number: 22948403.5
(22) Date of filing: 29.06.2022
(51) Int. Cl.: G06T 7/00, G06F 18/00, G06T 3/4038, G06T 7/33

(54) **IMAGE STITCHING METHOD, AND GENE SEQUENCING SYSTEM AND CORRESPONDING GENE SEQUENCER**
BILD-STITCHING-VERFAHREN UND GENSEQUENZIERUNGSSYSTEM UND ENTSPRECHENDER GENSEQUENZIERER
PROCÉDÉ D'ASSEMBLAGE D'IMAGE, SYSTÈME DE SÉQUENÇAGE DE GÈNE ET SÉQUENCEUR DE GÈNE CORRESPONDANT

(43) Date of publication of application: 07.05.2025
(73) Proprietor: Stomics Tech Co., Ltd., Shenzhen, Guangdong 518085 (CN)
(72) Inventor: LIU, Huanlin, Shenzhen, Guangdong 518083 (CN); LI, Mei, Shenzhen, Guangdong 518083 (CN); HUANG, Zirui, Shenzhen, Guangdong 518083 (CN); CHEN, Bichao, Shenzhen, Guangdong 518083 (CN); HONG, Yan, Shenzhen, Guangdong 518083 (CN); LI, Yuxiang, Shenzhen, Guangdong 518083 (CN)
(74) Representative: Meissner Bolte Nürnberg
(86) International application number: PCT/CN2022/102424
(87) International publication number: WO 2024/000288

(56) References cited:
- CN-A- 107 666 546
- CN-A- 108 320 276
- CN-A- 108 320 276
- CN-A- 112 204 615
- CN-A- 112 823 352
- CN-A- 114 092 325
- CN-A- 114 494 197
- US-A1- 2016 275 687
- CHALFOUN JOE ET AL: "MIST: Accurate and Scalable Microscopy Image Stitching Tool with Stage Modeling and Error Minimization", vol. 7, no. 1, 1 December 2017 (2017-12-01), XP055849263, Retrieved from the Internet <URL:https://www.nature.com/articles/s41598-017-04567-y.pdf> [retrieved on 20250520], DOI: 10.1038/s41598-017-04567-y

## Description

### FIELD

The present disclosure relates to the technical field of image processing, and more particularly, to an image stitching method, corresponding gene sequencing system, gene sequencer, computer device, and computer storage medium.

### BACKGROUND

Gene sequencing refers to the analysis of the base sequence of specific DNA fragments, namely the arrangement of adenine (A), thymine (T), cytosine (C), and guanine (G). The above four types of bases carry four different fluorophores respectively, which emit fluorescence of different wavelengths (colors) when excited. One of the commonly used sequencing methods is to identify the type of synthesized base by recognizing the fluorescence wavelength, thereby modifying the base sequence. The second-generation sequencing technology uses a high-resolution microscopy imaging system to capture fluorescent molecular images of DNA Nanoballs (i.e. DNBs) on the collected samples (such as gene sequencing chips), and input the fluorescent molecular images to base recognition software to decode the image signal and obtain the base sequence. When using a high-power microscope to observe the obtained base sequence, only a magnified image of the local area of the observed object can be obtained. In view of this, it is usually achieved by continuously taking multiple shots to collect the optical signal of the entire sample. After data collection is completed, it is also necessary to obtain complete and high-precision global sample images, which is of great significance for identifying and analyzing problems in the future.

Existing image stitching schemes typically utilize pixel values or feature points between images to perform alignment, fusion, and other operations to complete the stitching process.

Joe Chalfoun et al. published an article entitled "MIST: Accurate and Scalable Microscopy Image Stitching Tool with Stage Modeling and Error Minimization" in SCIENTIFIC REPORTS (vol. 7, no. 1, 1 December 2017, XP055849263, DOI: 10.1038/s41598-017-04567-y). The article disclosed that automated microscopy can image specimens larger than the microscope's field of view (FOV) by stitching overlapping image tiles and enables time-lapse studies of entire cell cultures in multiple imaging modalities. MIST (Microscopy Image Stitching Tool) was created for rapid and accurate stitching of large 2D time - lapse mosaics in the article. MIST estimates the mechanical stage model parameters (actuator backlash, and stage repeatability 'r') from computed pairwise translations and then minimizes stitching errors by optimizing the translations within a (4r)² square area. MIST has a performance-oriented implementation utilizing multicore hybrid CPU/GPU computing resources, which can process terabytes of time-lapse multi-channel mosaics 15 to 100 times faster than existing tools.

However, most existing stitching methods are based on feature similarity, which leads to a lack of measurement standards and makes it difficult to achieve high accuracy.

Therefore, it is necessary to provide an improved image stitching method and corresponding gene sequencing system for stitching sample images.

### SUMMARY

The image stitching method and corresponding gene sequencing system provided by the present invention are dedicated to solving at least one of the above-mentioned problems.

The invention is defined by the independent claims 1 and 9. Embodiments result from the dependent claims and the below description.

In particular, according to a first aspect of the present invention, a method for image stitching is provided. The method comprises:
obtaining multiple first images of a sample and template information about the track line or track cross of the sample;
pre-stitching the multiple first images to obtain the pre-stitching coordinates of the multiple first images;
selecting at least one second image from the multiple first images based on the characteristic of track line or track cross, and deriving a global template based on the template information of the sample and the pre-stitching coordinates of the second image; and
for a third image other than the second image among the multiple first images, calculating the offset between the pre-stitching coordinates of the third image and the corresponding template coordinates of the third image in the global template, and adjusting the coordinates of the third image based on the offset, so as to stitch and generate a stitched image about the sample.

According to a second aspect of the present invention, a gene sequencing system is provided. The gene sequencing system comprises:
an image acquisition module configured to obtain multiple first images of a sample and template information about the track line or track cross of the sample;
an image pre-stitching module configured to pre-stitch the multiple first images to obtain the pre-stitching coordinates of the multiple first images;
a global template derivation module configured to select at least one second image from the multiple first images based on the characteristic of track line or track cross, and derive a global template based on the template information of the sample and the pre-stitching coordinates of the second image; and
a stitching image generation module configured to, for a third image other than the second image among the multiple first images, calculate the offset between the pre-stitching coordinates of the third image and the corresponding template coordinates of the third image in the global template, and adjust the coordinates of the third image based on the offset, so as to stitch and generate a stitched image about the sample.

According to a third aspect of the present invention, a gene sequencer is provided. The gene sequencer comprises a processor configured to implement the image stitching method as mentioned above when executing a computer program stored in a memory.

According to a fourth aspect of the present invention, a computer device is provided. The computer device comprises a memory and a processor, wherein the memory stores a computer program, and the processor is configured to implement the image stitching method as mentioned above when executing the computer program.

According to a fifth aspect of the present invention, a non-volatile computer-readable storage medium is provided. The non-volatile computer-readable storage medium stores a computer program thereon. The computer program is configured to implement the image stitching method as mentioned above when executed by a processor.

A new stitching concept is present by using the image stitching method for stitching sample images of the present invention, while novel track cross and track line detection algorithms are also provided. **In** particular, the image stitching method of the present invention utilizes the unique track line features of microscope images to construct an absolute reference frame based on existing common image stitching algorithms, and makes the fine tuning of the stitching results, which enables to ensure pixel level stitching accuracy, thereby meeting the requirements of business scenarios. In addition, the image stitching method of the present invention has high operational efficiency and strong anti-interference ability. With the increasing amount of data in the field of life sciences, its applicability is becoming more and more extensive, and it can become a reliable standard in the field of image stitching.

### BRIEF DESCRIPTION OF THE DRAWINGS

Figure 1 is a flowchart of an image stitching method according to an embodiment of the present invention;
Figure 2 is an example diagram of a single image captured by a microscope camera;
Figure 3 is a schematic diagram of multiple images of a sample captured by a microscope camera;
Figure 4 is a schematic diagram of the pre-stitching results during the image stitching process according to an embodiment of the present invention;
Figure 5a is a schematic diagram of the positional relationship between two adjacent first images in the row obtained via the scanning in the horizontal direction during pre-stitching;
Figure 5b is a schematic diagram of the positional relationship between two adjacent first images in the column obtained via the scanning in the vertical direction during pre-stitching;
Figure 6 is a schematic diagram illustrating a global template for splicing samples according to an embodiment of the present invention; and
Figure 7 is a schematic diagram of the construction process of a global template for splicing samples according to an embodiment of the present invention.

### DETAILED DESCRIPTION

In order to better understand the above objectives, features, and advantages of the examples of the present invention, the present invention will be described in detail below in conjunction with the accompanying drawings and specific implementations. It should be illustrated that one or more features in the various implementations of the present application can be combined with each other without conflict.

In the following description, many specific details are elaborated to facilitate a full understanding of the examples of the present invention. The described implementations are a part of the implementations of the present invention, not all of them. Based on the implementations of the present invention, all other implementations obtained by ordinary skilled persons in the art without creative labor are within the scope of protection of the examples of the present invention.

Unless otherwise defined, all technical and scientific terms used herein have the same meanings as those commonly understood by those skilled in the art belonging to the technical field of the examples of the present invention. Herein, the terms used in this specification of the present invention are only for the purpose of describing specific implementations and are not intended to limit the examples of the present invention.

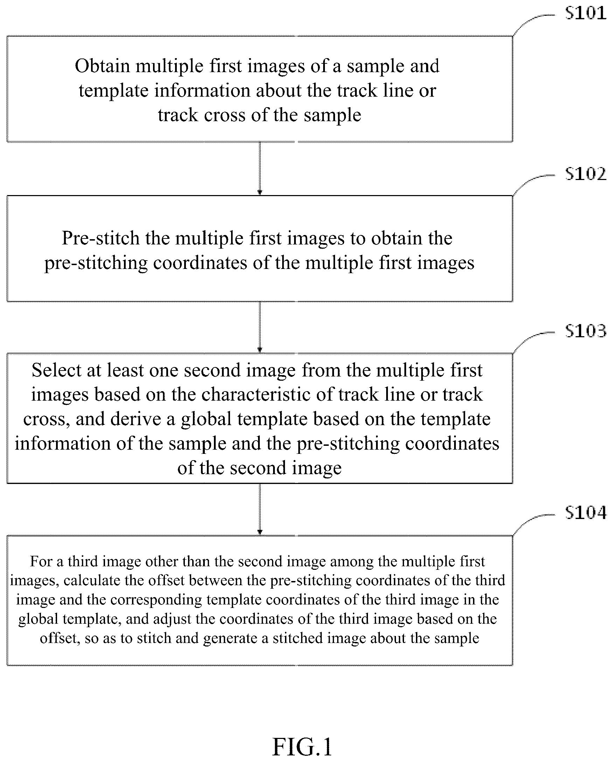

Figure 1 is a flowchart of an image stitching method according to an embodiment of the present invention.

As shown in Figure 1, the image stitching method may include the following steps:
S101: Obtaining multiple first images of a sample and template information about the track line (or referred to trajectory line) or track cross of the sample;
S102: Pre-stitching the multiple first images to obtain the pre-stitching coordinates of the multiple first images;
S103: Selecting at least one second image from the multiple first images based on the characteristic of track line or track cross, and deriving a global template based on the template information of the sample and the pre-stitching coordinates of the second image; and
S104: For a third image other than the second image among the multiple first images, calculating the offset between the pre-stitching coordinates of the third image and the corresponding template coordinates of the third image in the global template, and adjusting the coordinates of the third image based on the offset, so as to stitch and generate a stitched image about the sample.

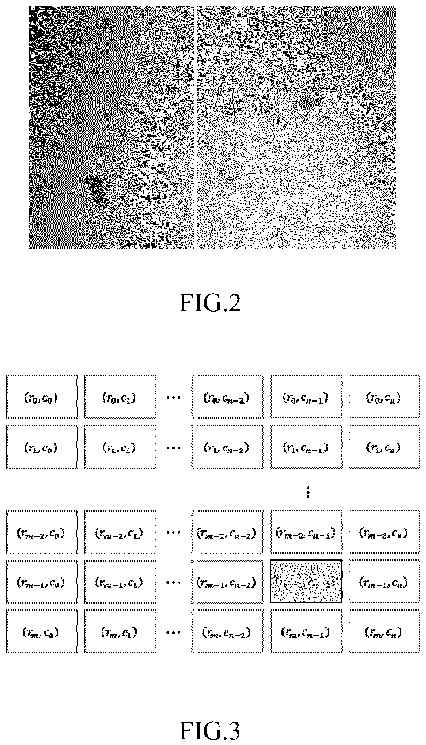

Figure 2 is an example diagram of a single sample captured by a microscope camera.

Herein, samples can include chips, mechanical structures, precision instruments, etc. Chips can include sample chips (such as biological sample chips), computing chips, etc. Computing chips can include spatiotemporal chips, sequencing chips, and so on. Therefore, the image stitching method of the present invention is not limited to stitching images of chips, but is also applicable to stitching images of samples of various mechanical structures or precision instruments.

In one implementation scheme, for example, the sample may be a gene sequencing chip. As shown in Figure 2, the captured image of the sample can be, for example, a fluorescence image formed by the emission of fluorophores during the sequencing process. The sample can be continuously captured using a microscope camera to obtain multiple images of various parts of the sample, which can be stitched together to form a global image of the sample as a whole or a local image of the sample. In other words, the stitched image may include the global image of the sample or the local image of the sample.

Herein, "first image" can refer to a photo of a field of view (FOV) obtained by a microscope camera making one capturing of a local part of the sample. During the sequencing process, several images can be captured sequentially for a single sample's local area. There are several track lines distributed horizontally and vertically in the image of each of the fields of view, and the intersection point of the track lines is track cross (or referred to trajectory point). Track line and track cross can be converted to each other; track cross can be obtained based on the two intersected track lines; and track line can be obtained based on collinear track crosses. The template information may include the index numbers of multiple track lines on the sample. As known to those skilled in the art, the distribution pattern of track lines on the sample is predetermined at the beginning of sample design. For example, assuming there are 10 track lines in the vertical direction of the sample, wherein their spacing can be, for example, 1, 2, 3, 4, 5, 4, 3, 2, 1, respectively. Assuming the position of the first track line is taken as the starting point (coordinate 0), the horizontal axis (x-axis) coordinates of the above 10 track lines are 0, 1, 3, 6, 10, 15, 19, 22, 24, and 25, respectively. The index numbers in the template information of the sample can be associated with the layout of the track lines on the sample. The index numbers of the 10 track lines mentioned above can be manually specified as 0, 1, 2, 3, 4, 5, 6, 7, 8, and 0, respectively.

Further, the template information of the sample obtained in step S101 may also include periodicity, for example, for the 10 track lines in the vertical direction of the above sample, they can be extended by one or more periods to the left and to the right respectively. For example, the spacing between the track lines formed by extending respective one period to the left and to the right can be 1, 2, 3, 4, 5, 4, 3, 2, 1, 1, 2, 3, 4, 5, 4, 3, 2, 1, 1, 2, 3, 4, 5, 4, 3, 2, 1 sequentially from left to right. From this, the horizontal axis (x-axis) coordinates of the expanded 28 track lines can be -25, -24, -22, -19, -15, -10, -6, -3, -1, 0, 1, 3, 6, 10, 15, 19, 22, 24, 25, 26, 28, 31, 35, 40, 44, 47, 49, 50, respectively, and their corresponding index numbers can be 0, 1, 2, 3, 4, 5, 6, 7, 8, 0, 1, 2, 3, 4, 5, 6, 7, 8, 0, 1, 2, 3, 4, 5, 6, 7, 8, 0.

It is noted that generally speaking, the index number of a sample corresponding to a certain track line is unique, and a certain index number on the sample will correspond to multiple track lines, which is determined by the periodicity of the track line design on the sample.

Microscopes can capture images of samples, for example, by scanning them line by line or column by column. The spatial distribution of multiple images after scanning can be shown in Figure 3. The multiple images can include, for example, n+1 columns and m+1 rows, including the images from an image (r₀, c₀) in the first row and first column to an image (rₘ, cₙ) in the last row and last column. For the image (rₘ₋₁, cₙ₋₁) illustrated in Figure 3, the image can have up to 8 adjacent images. In addition, the microscope can also record the camera position information when capturing the image during image capture. Subsequently, based on the camera position information recorded for any image, the corresponding position of the image can be determined and its adjacent images can be determined.

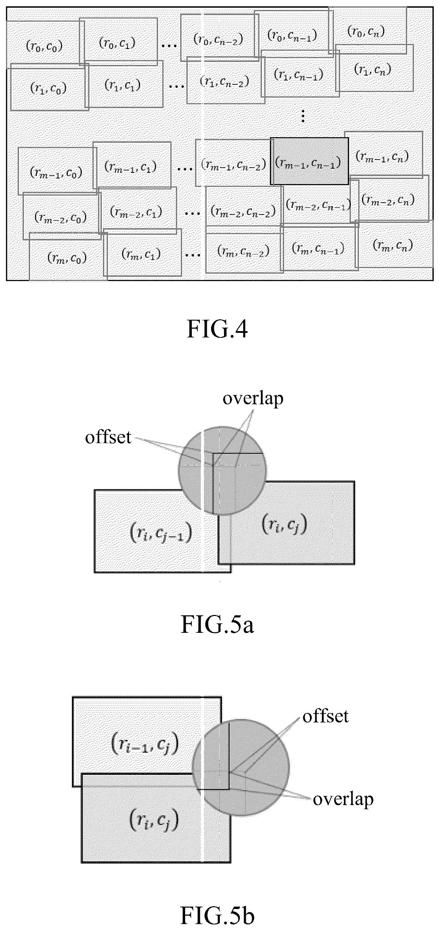

Figure 4 is a schematic diagram of the pre-stitching results of an image stitching method according to an embodiment of the present invention.

In the pre-stitching step of S102, multiple first images can be scanned, and the left neighbor image and right neighbor image of the current first image can be determined using for example a 2-nearest neighbor method based on the scanning order or information of camera position at the time of image capture, and then the offset(s) and overlap(s) between the first image and its adjacent images on the left and right can be determined, respectively. During the scanning process, combining the template information of the sample, it is preferable to use Fast Fourier Transform (FFT) or Scale Invariant Feature Transform (SIFT) to obtain the offset(s) and overlap(s) between adjacent first images. Based on the offset(s) and overlap(s) between adjacent first images obtained during the scanning process, the pre-stitching coordinates of the multiple first images can be obtained.

Figure 5a is a schematic diagram of the positional relationship between two adjacent first images in the row obtained via the scanning in the horizontal direction during pre-stitching; and Figure 5b is a schematic diagram of the positional relationship between two adjacent first images in the column obtained via the scanning in the vertical direction during pre-stitching.

Specifically, Figures 5a and 5b show the offset and overlap between adjacent first images obtained by scanning the first image horizontally and vertically, respectively. For horizontal scanning (with respect to Figure 5a), the overlap distance in the horizontal direction for the obtained two adjacent images in the row is referred to the overlap in the horizontal direction, and the offset distance in the vertical direction is referred to the offset in the vertical direction. Similarly, for vertical scanning (with respect to Figure 5b), the overlap distance in the vertical direction for the obtained two adjacent first images in the column is referred to the overlap in the vertical direction, and the offset distance in the horizontal direction is referred to the offset in the horizontal direction. After completing the horizontal and vertical scanning respectively, the offset matrix A and overlap matrix B of the multiple first images in the corresponding directions can be obtained. By using the offset matrix A and overlap matrix B, the spatial coordinates of each of the first images can be mapped, thereby completing the pre-stitching image of multiple first images as shown in Figure 4.

However, only pre-stitching the first image cannot achieve pixel level accuracy, and thus on this basis, further precise adjustments to the coordinates of the first image need to be made in steps S103 and S104.

**In** step S103, the selected second image (or reference image) may be the image with the most obvious track line features among the multiple first images, or the image with the most track crosses among the multiple first images. The second image is for example the highlighted image (rₘ₋₁, cₙ₋₁) in Figures 3 and 4, and then the detection of the track lines for the selected image (rₘ₋₁, cₙ₋₁) can be performed. The spacing between adjacent track lines detected is matched with the spacing between track lines specified in the chip design mentioned above, and then the index number corresponding to the track line in the selected second image is determined. That is, the index number corresponding to each of the track lines in the second image can be determined based on the distance between adjacent track lines in the second image. Then, a global template can be derived based on the index number of the second image and the pre-stitching coordinates of the second image.

In one example, as shown in Figure 2, due to the fact that the tissue slices on the sample will cover the track lines and a part of track crosses can be exposed at the position of the tissue cavity, the probability of complete track cross appearing in one image is higher than that of complete track line. Therefore, the image with the most track crosses can also be selected preferably as the second image.

In one embodiment, the index number corresponding to each of the track lines in the second image are determined based on the distance between adjacent track lines in the second image, and a global template is derived based on the index number of the second image and the pre-stitching coordinates of the second image.

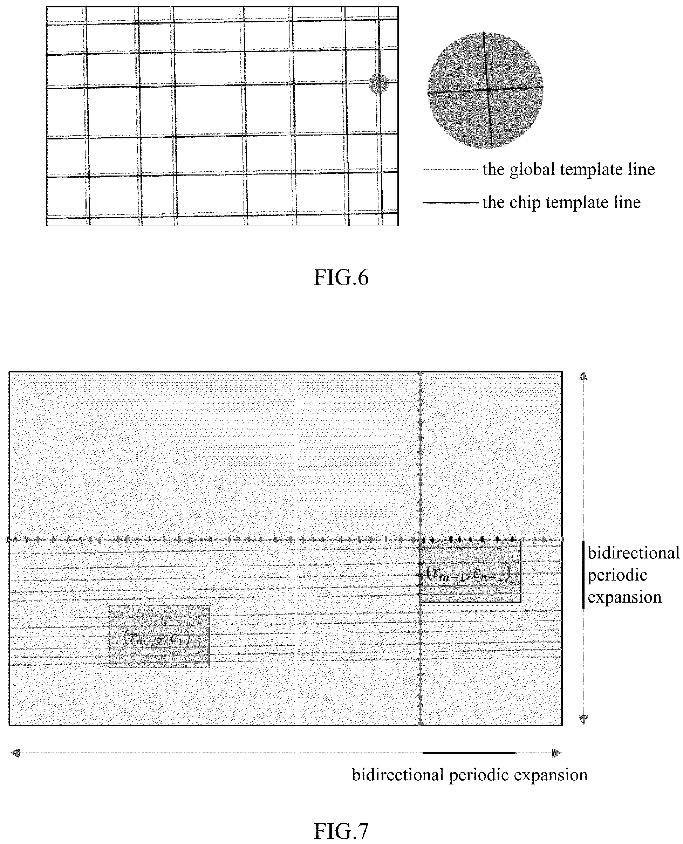

Figure 6 is a schematic diagram illustrating a global template for splicing samples according to an embodiment of the present invention; and Figure 7 is a schematic diagram of the construction process of a global template for splicing samples according to an embodiment of the present invention.

Referring to the construction example of the global template as shown in Figure 7, based on the position coordinates of the selected second image (rₘ₋₁, cₙ₋₁) in the pre-stitching stage and the index number of the track line, a global template (or referred to a global reference frame) based on the second image (rₘ₋₁, cₙ₋₁) can be obtained by performing left and right bidirectional periodic expansion in the horizontal direction as well as up and down bidirectional periodic expansion in the vertical direction.

The adjustment of the coordinates of the third image other than the selected second image (rₘ₋₁, cₙ₋₁) can be divided into two categories: adjusting the coordinates of the third image containing track crosses and adjusting the coordinates of the third image without track crosses.

The adjustment of the coordinates of the third image containing track crosses is achieved by adding the pre-stitching coordinates of each of the third images containing track crosses to the respective unique offset of the third images containing track crosses. The offset of the third image is a vector formed from the track cross on the third image to the template point in the global template corresponding to the track cross on the third image. Referring to the offset indicated by the arrow in the locally enlarged schematic diagram of Figure 6, the offset represents the vector from the track cross on the sample to the template line track cross in the derived global template corresponding to this track cross.

For the determination of the unique offset, the following method can be performed preferably:
for each third image containing the track crosses, obtaining the respective offset of each of track crosses in the third image, and selecting an offset with the median angle or median distance from the offsets as the unique offset of the third image; or,
for each third image containing the track crosses, obtaining the respective offset of each of track crosses in the third image, sorting the offsets based on the vector length of the offsets, and selecting an offset at the preset sorting position as the unique offset of the third image.

By adding the unique offset of each of the third images containing track crosses to the respective unique offset of the third images containing track crosses, the adjusted coordinates of the third images containing track crosses can be obtained.

The adjustment of the coordinates of the third image without track crosses can be achieved by using a nearest neighbor adjustment method, wherein the nearest neighbor adjustment method comprises: for each third image without track crosses, adjusting the coordinates of the third image without track crosses based on the unique offset of a third image containing track crosses, as well as based on the offset and overlap between the third image without track crosses and the third image containing track crosses; wherein the third image containing track crosses is closest to the third image without track crosses.

In particular, due to issues such as tissue coverage, contamination of chip features, and the capturing quality of the microscope camera, there are some images without track crosses thereon. In this case, the third image without track crosses can be aligned based on the offset and overlap between itself and the adjacent third image containing track crosses or between itself and the nearest third image containing track crosses, wherein the third image containing track crosses refers to the adjusted image. It should be illustrated that the measure of the nearest distance is Manhattan distance, not Euclidean distance.

The adjustment of the coordinates of third image further comprises performing seam fusion processing between adjacent third images, for example, linear weighted fusion method can be used.

According to another aspect of the present invention, a gene sequencing system is also provided, characterized in that, the gene sequencing system comprises:
an image acquisition module configured to obtain multiple first images of a sample and template information about the track line or track cross of the sample;
an image pre-stitching module configured to pre-stitch the multiple first images to obtain the pre-stitching coordinates of the multiple first images;
a global template derivation module configured to select at least one second image from the multiple first images based on the characteristic of track line or track cross, and derive a global template based on the template information of the sample and the pre-stitching coordinates of the second image; and
a stitching image generation module configured to, for a third image other than the second image among the multiple first images, calculate the offset between the pre-stitching coordinates of the third image and the corresponding template coordinates of the third image in the global template, and adjust the coordinates of the third image based on the offset, so as to stitch and generate a stitched image about the sample.

In an example, the offset of the third image is a vector formed from the track cross on the third image to the template point in the global template corresponding to the track cross on the third image.

In an example, the stitching image generation module is further configured to adjust the coordinates of the third image containing track crosses by adding the pre-stitching coordinates of each third image containing track crosses to the respective unique offset for the third image containing track crosses.

In an example, the stitching image generation module is further configured to obtain the unique offset by:
for each third image containing the track crosses, obtaining the respective offset of each of track crosses in the third image, and selecting an offset with the median angle or median distance from the offsets as the unique offset of the third image; or,
for each third image containing the track crosses, obtaining the respective offset of each of track crosses in the third image, sorting the offsets based on the vector length of the offsets, and selecting an offset at the preset sorting position as the unique offset of the third image.

In an example, the stitching image generation module is further configured to use a nearest neighbor adjustment method to adjust the coordinates of third image without track cross es, wherein the nearest neighbor adjustment method comprises:
for each third image without track crosses, adjusting the coordinates of the third image without track crosses based on the unique offset of a third image containing track crosses, as well as based on the offset and overlap between the third image without track crosses and the third image containing track crosses; wherein the third image containing track crosses is closest to the third image without track crosses.

The features mentioned in the above descriptions of various examples of image stitching methods can also be extended and applied to the gene sequencing system herein and the gene sequencer below. For the sake of simplicity, further elaboration is not provided here.

The present invention also provides a gene sequencer, characterized in that, the gene sequencer comprises a processor configured to implement any one of the image stitching methods for stitching the image of the sample described above when executing a computer program stored in a memory. It should be illustrated that the gene sequencer may include a chip platform, an optical system, and a liquid pathway system. Among them, the chip platform can be used to load samples, the optical system can be used to acquire images, and the liquid pathway system can be used to perform biochemical reactions using preset reagents. The processor is also used to execute the image stitching method and various software, such as operating systems and application display software, installed in the gene sequencer. A processor includes but is not limited to a Central Processing Unit (CPU), a Micro Controller Unit (MCU), and other devices used to interpret computer instructions and process data in computer software.

The gene sequencer can also comprise a display screen and a memory. The memory and display screen can be electrically connected to the processor, respectively. The display screen is installed on the gene sequencer for displaying information. The memory can be different types of storage devices for storing various types of data. For example, it can be the storage or memory (which here can be referred to internal storage) of a gene sequencer, or it can be a storage card that can be externally connected to the gene sequencer, such as flash memory, Smart Media (SM) Card, Secure Digital (SD) Card, etc. Moreover, the memory may include high-speed random access memory, as well as non-volatile memory such as hard disk, memory, plug-in hard disk, smart storage card, Secure Digital (SD) Card, Flash Card, at least one disk storage device, flash device, or other volatile solid-state storage devices. Memory is used to store various types of data, such as various applications installed in the gene sequencer, data set and obtained by applying the above image stitching methods, and other information.

The present invention also provides a computer device comprising a memory and a processor, wherein the memory stores a computer program, and the processor is configured to implement any one of the image stitching methods described above when executing the computer program.

The present invention also provides a non-volatile computer-readable storage medium on which a computer program is stored, characterized in that, the computer program, when executed by a processor, implements any one of the image stitching methods described above.

If the integrated modules/units of the gene sequencing system/gene sequencer/computer device are implemented in the form of software functional units and sold or used as independent products, they can be stored in a computer-readable storage medium. Based on this understanding, implementing, by the present invention, all or part of the processes in the above implementation methods can also be completed by instructing relevant hardware through a computer program. The computer program can be stored in a computer-readable storage medium, and when executed by a processor, this computer program can implement the steps of example(s) for each of the methods described above. Among them, the computer program includes computer program code, which can be source code form, object code form, executable file, or some intermediate form, etc. The computer-readable storage medium may include any entity or apparatus capable of carrying the computer program code, a recording medium, USB flash disk, mobile hard disk, magnetic disk, optical disk, computer memory, Read-Only Memory (ROM), Random Access Memory (RAM), Electric carrier signal, telecommunications signal, and software distribution media, etc.

The processor can be a central processing unit (CPU), and also can be other general-purpose processors, digital signal processors (DSP), Application Specific Integrated Circuit (ASIC), Field Programmable Gate Array (FPGA), or other programmable logic devices, discrete gates or transistor logic devices, discrete hardware components, etc. A general-purpose processor can be a microprocessor or any conventional processor, etc. The processor is the control center of the gene sequencing system/gene sequencer, and utilizes various interfaces and lines to connect the various parts of the entire gene sequencing system/gene sequencer.

The memory is used to store the computer programs and/or modules, and the processor realizes various functions of the gene sequencing system/gene sequencer by running or executing the computer programs and/or modules stored in the memory as well as calling the data stored in the memory. The memory may mainly include a storage program area and a storage data area, wherein the storage program area may store an operating system, at least one application required for a function, etc.

In the several specific implementations provided by the present invention, it should be understood that the disclosed method can be implemented in other ways. For example, the system implementation described above is only illustrative. For example, the division of modules is only a logical function division, and there may be other division methods in actual implementation.

Therefore, from any point of view, the examples should be regarded as exemplary and non-limiting. The scope of the examples of the present invention is limited by the appended claims rather than the above description. Therefore, it is intended to cover all variations falling within the meaning and scope of the equivalent elements of the claims within the examples of the present invention. Any reference numerals in the claims should not be regarded as limiting the claims involved. Multiple units, modules, or apparatus stated in the system, apparatus, or terminal claims may also be implemented by the same unit, module, or apparatus through software or hardware.

The above implementations are only used to illustrate the technical solutions of the examples of the present invention and not to limit them.

## Claims

1. A computer implemented method for image stitching, wherein the method comprises:
obtaining multiple first images of a sample and template information about a track line or track cross of the sample (S101); the template information comprises index numbers of multiple track lines on the sample, the track lines are distributed horizontally and vertically in each of the multiple first images, and the intersection point of the track lines is the track cross;
pre-stitching the multiple first images to obtaint pre-stitching coordinates of the multiple first images (S102);
selecting at least one second image from the multiple first images based on a characteristic of track line or track cross, and determining the index numbers corresponding to each track line in the second image based on a distance between adjacent track lines in the second image, and deriving a global template based on the index numbers of the second image and pre-stitching coordinates of the second image, so as to derive the global template based on the template information of the sample and the pre-stitching coordinates of the second image (S103); and
for a third image other than the second image among the multiple first images, calculating a offset between the pre-stitching coordinates of the third image and the corresponding template coordinates of the third image in the global template, and adjusting the coordinates of the third image based on the offset, so as to stitch and generate a stitched image about the sample (S104).

2. The computer implemented method for image stitching according to claim 1, **characterized in that**, said pre-stitching the multiple first images to obtain the pre-stitching coordinates of the multiple first images comprises (S102):
scanning the multiple first images and obtaining the pre-stitching coordinates of the multiple first images based on the offset and overlap between adjacent first images obtained during the scanning process.

3. The computer implemented method for image stitching according to claim 2, **characterized in that**, the offset and overlap between adjacent first images obtained are obtained by scanning multiple first images using Fast Fourier Transform or Scale Invariant Feature Transform.

4. The computer implemented method for image stitching according to claim 1, **characterized in that**, the second image is the image with the most obvious track line features among the multiple first images, or the image with the most track crosses among the multiple first images.

5. The computer implemented method for image stitching according to claim 1, **characterized in that**, the offset of the third image is a vector formed from the track cross on the third image to the template point in the global template corresponding to the track cross on the third image.

6. The computer implemented method for image stitching according to claim 1, **characterized in that**
said adjusting the coordinates of the third image comprises adjusting the coordinates of the third image containing track crosses in a manner of adding the pre-stitching coordinates of each third image containing track crosses to the respective unique offset for the third image containing track crosses; or
said adjusting the coordinates of the third image further comprises performing seam fusion processing between adjacent third images.

7. The computer implemented method for image stitching according to claim 6, **characterized in that**, the unique offset is obtained in a manner of:
for each third image containing the track crosses, obtaining the respective offset of each of track crosses in the third image, and selecting an offset with the median angle or median distance from the offsets as the unique offset of the third image; or,
for each third image containing the track crosses, obtaining the respective offset of each of track crosses in the third image, sorting the offsets based on the vector length of the offsets, and selecting an offset at the preset sorting position as the unique offset of the third image.

8. The computer implemented method for image stitching according to claim 7, **characterized in that**, said adjusting the coordinates of the third image based on the offset further comprises using a nearest neighbor adjustment method to adjust the coordinates of third image without track crosses, wherein the nearest neighbor adjustment method comprises:
for each third image without track crosses, adjusting the coordinates of the third image without track crosses based on the unique offset of a third image containing track crosses, as well as based on the offset and overlap between the third image without track crosses and the third image containing track crosses; wherein the third image containing track crosses is closest to the third image without track crosses.

9. A gene sequencing system, wherein the gene sequencing system comprises:
an image acquisition module configured to obtain multiple first images of a sample and template information about a
track line or track cross of the sample; the template information comprises index numbers of multiple track lines on the sample, the track lines are distributed horizontally and vertically in each of the multiple first images, and the intersection point of the track lines is the track cross;
an image pre-stitching module configured to pre-stitch the multiple first images to obtain pre-stitching coordinates of the multiple first images;
a global template derivation module configured to select at least one second image from the multiple first images based on a
characteristic of track line or track cross, and determine the index numbers corresponding to each track line in the second image based on a distance between adjacent track lines in the second image, and derive a global template based on the index numbers of the second image and pre-stitch coordinates of the second image, so as to derive the global template based on the template information of the sample and the pre-stitching coordinates of the second image; and
a stitching image generation module configured to, for a third image other than the second image among the multiple first images, calculate a offset between the pre-stitching coordinates of the third image and the corresponding template coordinates of the third image in the global template, and adjust the coordinates of the third image based on the offset, so as to stitch and generate a stitched image about the sample.

10. The gene sequencing system according to claim 9, **characterized in that**, the offset of the third image is a vector formed from the track cross on the third image to the template point in the global template corresponding to the track cross on the third image.

11. The gene sequencing system according to claim 9, **characterized in that**, the stitching image generation module is further configured to adjust the coordinates of the third image containing track crosses in a manner of adding the pre-stitching coordinates of each third image containing track crosses to the respective unique offset for the third image containing track crosses.

12. The gene sequencing system according to claim 11, **characterized in that**, the stitching image generation module is further configured to obtain the unique offset in a manner of:
for each third image containing the track crosses, obtaining the respective offset of each of track crosses in the third image, and selecting an offset with the median angle or median distance from the offsets as the unique offset of the third image; or,
for each third image containing the track crosses, obtaining the respective offset of each of track crosses in the third image, sorting the offsets based on the vector length of the offsets, and selecting an offset at the preset sorting position as the unique offset of the third image.

13. The gene sequencing system according to claim 9, **characterized in that**, the stitching image generation module is further configured to use a nearest neighbor adjustment method to adjust the coordinates of third image without track crosses, wherein the nearest neighbor adjustment method comprises:
for each third image without track crosses, adjusting the coordinates of the third image without track crosses based on the unique offset of a third image containing track crosses, as well as based on the offset and overlap between the third image without track crosses and the third image containing track crosses; wherein the third image containing track crosses is closest to the third image without track crosses.

14. A computer device, wherein comprising a memory and a processor, wherein the memory stores a computer program, and the processor is configured to implement the image stitching method according to any one of claims 1-8 when executing the computer program.

## Patentansprüche

1. Computerimplementiertes Verfahren zum Zusammenfügen von Bildern, wobei das Verfahren umfasst:
Erhalten mehrerer erster Bilder einer Probe sowie Vorlageninformationen über eine Spurlinie oder ein Spurkreuz der Probe (S101); die Vorlageninformationen umfassen Indexnummern mehrerer Spurlinien auf der Probe, die Spurlinien sind in jedem der mehreren ersten Bilder horizontal und vertikal verteilt, und der Schnittpunkt der Spurlinien ist das Spurkreuz;
Vorzusammenfügen der mehreren ersten Bilder, um Vorzusammenfügungskoordinaten der mehreren ersten Bilder zu erhalten (S102);
Auswählen mindestens eines zweiten Bildes aus den mehreren ersten Bildern auf der Grundlage einer Eigenschaft der Spurlinie oder des Spurkreuzes und Bestimmen der jeder Spurlinie im zweiten Bild entsprechenden Indexnummern auf der Grundlage eines Abstands zwischen benachbarten Spurlinien im zweiten Bild sowie Ableiten einer globalen Vorlage auf der Grundlage der Indexnummern des zweiten Bildes und der Vorzusammenfügungskoordinaten des zweiten Bildes, um die globale Vorlage auf der Grundlage der Vorlageninformationen der Probe und der Vorzusammenfügungskoordinaten des zweiten Bildes abzuleiten ; und für ein drittes Bild unter den mehreren ersten Bildern, das sich vom zweiten Bild unterscheidet, Berechnen eines Versatzes zwischen den Vorzusammenfügungskoordinaten des dritten Bildes und den entsprechenden Vorlagenkoordinaten des dritten Bildes in der globalen Vorlage, und Anpassen der Koordinaten des dritten Bildes auf der Grundlage des Versatzes, um ein zusammengefügtes Bild um die Probe herum zu erzeugen (S104).

2. Computerimplementiertes Verfahren zum Zusammenfügen von Bildern gemäß Anspruch 1, **dadurch gekennzeichnet, dass** das Vorzusammenfügen der mehreren ersten Bilder zum Ermitteln der Vorzusammenfügungskoordinaten der mehreren ersten Bilder Folgendes umfasst (S102):
Scannen der mehreren ersten Bilder und Ermitteln der Vorzusammenfügungskoordinaten der mehreren ersten Bilder auf der Grundlage des Versatzes und der Überlappung zwischen benachbarten ersten Bildern, die während des Scanvorgangs ermittelt wurden.

3. Computerimplementiertes Verfahren zum Zusammenfügen von Bildern gemäß Anspruch 2, **dadurch gekennzeichnet, dass** der Versatz und die Überlappung zwischen benachbarten ersten Bildern durch Scannen mehrerer erster Bilder unter Verwendung der Fast-Fourier-Transformation oder der skaleninvarianten Merkmalstransformation ermittelt werden.

4. Computerimplementiertes Verfahren zum Zusammenfügen von Bildern nach Anspruch 1, **dadurch gekennzeichnet, dass** das zweite Bild das Bild mit den offensichtlichsten Spurlinienmerkmalen unter den mehreren ersten Bildern oder das Bild mit den meisten Spurkreuzen unter den mehreren ersten Bildern ist.

5. Computerimplementiertes Verfahren zum Zusammenfügen von Bildern nach Anspruch 1, **dadurch gekennzeichnet, dass** der Versatz des dritten Bildes ein Vektor ist, der aus dem Spurkreuz auf dem dritten Bild zu dem Vorlagenpunkt in der globalen Vorlage gebildet wird, der dem Spurkreuz auf dem dritten Bild entspricht.

6. Computerimplementiertes Verfahren zum Zusammenfügen von Bildern nach Anspruch 1, **dadurch gekennzeichnet, dass**
besagtes Anpassen der Koordinaten des dritten Bildes das Anpassen der Koordinaten des dritten Bildes, das Spurkreuze enthält, in der Weise umfasst, dass die Vorzusammenfügungskoordinaten jedes dritten Bildes, das Spurkreuze enthält, zu dem jeweiligen eindeutigen Versatz für das dritte Bild, das Spurkreuze enthält, addiert werden; oder
besagtes Anpassen der Koordinaten des dritten Bildes ferner das Durchführen einer Nahtfusionsverarbeitung zwischen benachbarten dritten Bildern umfasst.

7. Computerimplementiertes Verfahren zum Zusammenfügen von Bildern gemäß Anspruch 6, **dadurch gekennzeichnet, dass** der eindeutige Versatz auf folgende Weise ermittelt wird:
Erhalten, für jedes dritte Bild, das die Spurkreuze enthält, des jeweiligen Versatzes jedes einzelnen Spurkreuzes in dem dritten Bild, und Auswählen eines Versatzes mit dem Medianwinkel oder dem Medianabstand der Versätze als den eindeutigen Versatz des dritten Bildes;
oder,
Erhalten, für jedes dritte Bild, das die Spurkreuze enthält, des jeweiligen Versatzes jedes der Spurkreuze in dem dritten Bild, Sortieren der Versätze auf der Grundlage der Vektorlänge der Versätze und Auswählen eines Versatzes an der vorbestimmten Sortierposition als den eindeutigen Versatz des dritten Bildes.

8. Computerimplementiertes Verfahren zum Zusammenfügen von Bildern gemäß Anspruch 7, **dadurch gekennzeichnet, dass** besagtes Anpassen der Koordinaten des dritten Bildes auf der Grundlage des Versatzes ferner die Verwendung eines "Nearest-Neighbor"-Anpassungsverfahrens umfasst, um die Koordinaten des dritten Bildes ohne Spurkreuze anzupassen, wobei das "Nearest-Neighbor"-Anpassungsverfahren Folgendes umfasst:
Anpassen, für jedes dritte Bild ohne Spurkreuze, der Koordinaten des dritten Bildes ohne Spurkreuze auf der Grundlage des eindeutigen Versatzes eines dritten Bildes, das Spurkreuze enthält, sowie auf der Grundlage des Versatzes und der Überlappung zwischen dem dritten Bild ohne Spurkreuze und dem dritten Bild, das Spurkreuze enthält; wobei das dritte Bild, das Spurkreuze enthält, dem dritten Bild ohne Spurkreuze am nächsten liegt.

9. Gensequenzierungssystem, wobei das Gensequenzierungssystem umfasst:
ein Bildaufnahmemodul, das so konfiguriert oder ausgebildet ist, dass es mehrere erste Bilder einer Probe sowie Vorlageninformationen über eine Spurlinie oder ein Spurkreuz der Probe erhält; wobei die Vorlageninformationen Indexnummern mehrerer Spurlinien auf der Probe umfassen, die Spurlinien in jedem der mehreren ersten Bilder horizontal und vertikal verteilt sind und der Schnittpunkt der Spurlinien das Spurkreuz ist;
ein Bildvorzusammenfügungsmodul, das so konfiguriert oder ausgebildet ist, dass es die mehreren ersten Bilder vorzusammenfügt, um Vorzusammenfügungskoordinaten der mehreren ersten Bilder zu erhalten;
ein Modul zur Ableitung einer globalen Vorlage, das so konfiguriert oder ausgebildet ist, dass es mindestens ein zweites Bild aus den mehreren ersten Bildern auf der Grundlage einer Eigenschaft der Spurlinie oder des Spurkreuzes auswählt und die jeder Spurlinie im zweiten Bild entsprechenden Indexnummern auf der Grundlage eines Abstands zwischen benachbarten Spurlinien im zweiten Bild bestimmt und eine globale Vorlage auf der Grundlage der Indexnummern des zweiten Bildes und der Vorzusammenfügungskoordinaten des zweiten Bildes ableitet, um die globale Vorlage auf der Grundlage der Vorlageninformationen der Probe und der Vorzusammenfügungskoordinaten des zweiten Bildes abzuleiten; und ein Modul zur Erzeugung zusammengefügter Bilder, das so konfiguriert oder ausgebildet ist, dass es für ein drittes Bild unter den mehreren ersten Bildern, das sich vom zweiten Bild unterscheidet, einen Versatz zwischen den Vorzusammenfügungskoordinaten des dritten Bildes und den entsprechenden Vorlagenkoordinaten des dritten Bildes in der globalen Vorlage berechnet und die Koordinaten des dritten Bildes auf der Grundlage des Versatzes anpasst, um ein zusammengefügtes Bild um die Probe herum zusammenzufügen und zu erzeugen.

10. Gensequenzierungssystem nach Anspruch 9, **dadurch gekennzeichnet, dass** der Versatz des dritten Bildes ein Vektor ist, der aus dem Spurkreuz auf dem dritten Bild zu dem Punkt in der globalen Vorlage gebildet wird, der dem Spurkreuz auf dem dritten Bild entspricht.

11. Gensequenzierungssystem nach Anspruch 9, **dadurch gekennzeichnet, dass** das Modul zur Erzeugung zusammengefügter Bilder ferner so konfiguriert oder ausgebildet ist, dass es die Koordinaten des dritten Bildes, das Spurkreuze enthält, in einer Weise anpasst, bei der die Vorzusammenfügungskoordinaten jedes dritten Bildes, das Spurkreuze enthält, zu dem jeweiligen eindeutigen Versatz für das dritte Bild, das Spurkreuze enthält, addiert werden.

12. Gensequenzierungssystem nach Anspruch 11, **dadurch gekennzeichnet, dass** das Modul zur Erzeugung zusammengefügter Bilder ferner so konfiguriert oder ausgebildet ist, dass es den eindeutigen Versatz auf folgende Weise ermittelt:
Erhalten, für jedes dritte Bild, das die Spurkreuze enthält, des jeweiligen Versatzes jedes einzelnen Spurkreuzes in dem dritten Bild, und Auswählen eines Versatzes mit dem Medianwinkel oder dem Medianabstand der Versätze als den eindeutigen Versatz des dritten Bildes;
oder
Erhalten, für jedes dritte Bild, das die Spurkreuze enthält, des jeweiligen Versatzes jedes der Spurkreuze in dem dritten Bild, Sortieren der Versätze auf der Grundlage der Vektorlänge der Versätze und Auswählen eines Versatzes an der voreingestellten Sortierposition als den eindeutigen Versatz des dritten Bildes.

13. Gensequenzierungssystem nach Anspruch 9, **dadurch gekennzeichnet, dass** das Modul zur Erzeugung zusammengefügter Bilder ferner so konfiguriert oder ausgebildet ist, dass es ein "Nearest-Neighbor"-Anpassungsverfahren verwendet, um die Koordinaten des dritten Bildes ohne Spurkreuze anzupassen, wobei das "Nearest-Neighbor"-Anpassungsverfahren Folgendes umfasst:
Anpassen, für jedes dritte Bild ohne Spurkreuze, der Koordinaten des dritten Bildes ohne Spurkreuze auf der Grundlage des eindeutigen Versatzes eines dritten Bildes, das Spurkreuze enthält, sowie auf der Grundlage des Versatzes und der Überlappung zwischen dem dritten Bild ohne Spurkreuze und dem dritten Bild, das Spurkreuze enthält; wobei das dritte Bild, das Spurkreuze enthält, dem dritten Bild ohne Spurkreuze am nächsten liegt.

14. Computervorrichtung, die einen Speicher und einen Prozessor umfasst, wobei der Speicher ein Computerprogramm speichert und der Prozessor so konfiguriert oder ausgebildet ist, dass er bei der Ausführung des Computerprogramms das Verfahren zum Zusammenfügen von Bildern gemäß einem der Ansprüche 1 bis 8 ausführt.

## Revendications

1. Procédé mis en œuvre par ordinateur pour l'assemblage d'images, dans lequel le procédé comprend :
obtenir plusieurs premières images d'un échantillon et des informations de gabarit concernant une ligne de repère ou une intersection de repères de l'échantillon (S101) ; les informations de gabarit comprennent des numéros d'index de plusieurs lignes de repère sur l'échantillon, les lignes de repère sont réparties horizontalement et verticalement dans chacune des premières images, et le point d'intersection de repères constitue l'intersection de repères ;
pré-assembler les multiples premières images afin d'obtenir des coordonnées de pré-assemblage des multiples premières images (S102) ;
sélectionner au moins une deuxième image parmi les multiples premières images sur la base d'une caractéristique de la ligne de repère ou de l'intersection de repères, et déterminer les numéros d'index correspondant à chaque ligne de repère dans la deuxième image sur la base d'une distance entre des lignes de repère adjacentes dans la deuxième image, et dériver un modèle global sur la base des numéros d'index de la deuxième image et des coordonnées de pré-assemblage de la deuxième image, de manière à dériver le modèle global sur la base des informations de modèle de l'échantillon et des coordonnées de pré-assemblage de la deuxième image (S103) ; et
pour une troisième image autre que la deuxième image parmi les multiples premières images, calculer un décalage entre les coordonnées de pré-assemblage de la troisième image et les coordonnées de gabarit correspondantes de la troisième image dans le gabarit global, et ajuster les coordonnées de la troisième image en fonction du décalage, de manière à assembler et à générer une image assemblée autour de l'échantillon (S104).

2. Procédé mis en œuvre par ordinateur pour l'assemblage d'images selon la revendication 1, **caractérisé en ce que** ledit pré-assemblage des multiples premières images pour obtenir les coordonnées de pré-assemblage des multiples premières images comprend (S102) :
la numérisation des multiples premières images et l'obtention des coordonnées de pré-assemblage des multiples premières images sur la base du décalage et du chevauchement entre les premières images adjacentes obtenus au cours du processus de numérisation.

3. Procédé mis en œuvre par ordinateur pour l'assemblage d'images selon la revendication 2, **caractérisé en ce que** le décalage et le chevauchement entre les premières images adjacentes obtenues sont déterminés en numérisant les multiples premières images à l'aide de la transformée de Fourier rapide ou de la transformée de caractéristiques invariante d'échelle.

4. Procédé mis en œuvre par ordinateur pour l'assemblage d'images selon la revendication 1, **caractérisé en ce que** la deuxième image est l'image présentant les caractéristiques de lignes de repère les plus évidentes parmi les multiples premières images, ou l'image présentant le plus grand nombre de intersections de repères parmi les multiples premières images.

5. Procédé de fusion d'images mis en œuvre par ordinateur selon la revendication 1, **caractérisé en ce que** le décalage de la troisième image est un vecteur formé à partir du point d'intersection de repères sur la troisième image vers le point du modèle dans le modèle global correspondant au point d'intersection de repères sur la troisième image.

6. Procédé mis en œuvre par ordinateur pour l'assemblage d'images selon la revendication 1, **caractérisé en ce que**
ledit ajustement des coordonnées de la troisième image comprend l'ajustement des coordonnées de la troisième image contenant des intersections de repères en ajoutant les coordonnées pré-assemblage de chaque troisième image contenant des intersections de repères au décalage unique respectif pour la troisième image contenant des intersections de repères ; ou
ledit ajustement des coordonnées de la troisième image comprend en outre l'exécution d'un traitement de fusion des joints entre des troisièmes images adjacentes.

7. Procédé mis en œuvre par ordinateur pour l'assemblage d'images selon la revendication 6, **caractérisé en ce que** le décalage unique est obtenu de la manière suivante :
obtenir, pour chaque troisième image contenant les intersections de repères, le décalage respectif de chacun des intersections de repères dans la troisième image, et sélectionner un décalage présentant l'angle médian ou la distance médiane parmi les décalages comme décalage unique de la troisième image ; ou,
obtenir, pour chaque troisième image contenant les intersections de repères, le décalage respectif de chacun des intersections de repères dans la troisième image, trier les décalages en fonction de la longueur vectorielle des décalages, et sélectionner un décalage à la position de tri prédéfinie comme décalage unique de la troisième image.

8. Procédé mis en œuvre par ordinateur pour l'assemblage d'images selon la revendication 7, **caractérisé en ce que** ledit ajustement des coordonnées de la troisième image sur la base du décalage comprend en outre l'utilisation d'un procédé d'ajustement par le plus proche voisin pour ajuster les coordonnées de la troisième image sans intersections de repères, dans lequel le procédé d'ajustement par le plus proche voisin comprend :
pour chaque troisième image sans intersections de repères, l'ajustement des coordonnées de la troisième image sans intersections de repères en fonction du décalage unique d'une troisième image contenant des intersections de repères, ainsi qu'en fonction du décalage et du chevauchement entre la troisième image sans intersections de repères et la troisième image contenant des intersections de repères ; dans lequel la troisième image contenant des intersections de repères est la plus proche de la troisième image sans intersections de repères.

9. Système de séquençage génétique, **caractérisé en ce que** ledit système comprend :
un module d'acquisition d'images configuré pour obtenir plusieurs premières images d'un échantillon et des informations de référence concernant une ligne de repère ou un intersection de repères de l'échantillon ; les informations de référence comprennent les numéros d'index de plusieurs lignes de repère sur l'échantillon, les lignes de repère sont réparties horizontalement et verticalement dans chacune des premières images, et le point d'intersection des lignes de repère constitue l'intersection de repères ;
un module de pré-assemblage d'images configuré pour pré-assembler les multiples premières images afin d'obtenir des coordonnées de pré-assemblage des multiples premières images ;
un module de dérivation de gabarit global configuré pour sélectionner au moins une deuxième image parmi les multiples premières images sur la base d'une caractéristique de la ligne de repère ou de l'intersection de repères, et déterminer les numéros d'index correspondant à chaque ligne de repère dans la deuxième image sur la base d'une distance entre des lignes de repère adjacentes dans la deuxième image, et dériver un gabarit global sur la base des numéros d'index de la deuxième image et des coordonnées de pré-assemblage de la deuxième image, de manière à dériver le gabarit global sur la base des informations de gabarit de l'échantillon et des coordonnées de pré coordonnées de pré-assemblage de la deuxième image ; et
un module de génération d'image assemblée configuré pour, pour une troisième image autre que la deuxième image parmi les multiples premières images, calculer un décalage entre les coordonnées de pré-assemblage de la troisième image et les coordonnées de modèle correspondantes de la troisième image dans le modèle global, et ajuster les coordonnées de la troisième image en fonction du décalage, de manière à assembler et générer une image assemblée autour de l'échantillon.

10. Système de séquençage de gènes selon la revendication 9, **caractérisé en ce que** le décalage de la troisième image est un vecteur formé à partir de l'intersection de repères sur la troisième image vers le point du modèle dans le modèle global correspondant à l'intersection de repères sur la troisième image.

11. Système de séquençage génétique selon la revendication 9, **caractérisé en ce que** le module de génération d'images assemblées est en outre configuré pour ajuster les coordonnées de la troisième image contenant des intersections de repères en ajoutant les coordonnées pré-assemblage de chaque troisième image contenant des intersections de repères au décalage unique respectif pour la troisième image contenant des intersections de repères.

12. Système de séquençage génétique selon la revendication 11, **caractérisé en ce que** le module de génération d'images assemblées est en outre configuré pour obtenir le décalage unique de la manière suivante :
obtenir, pour chaque troisième image contenant les intersections de repères, le décalage respectif de chacune des intersections de repères dans la troisième image, et sélectionner un décalage présentant l'angle médian ou la distance médiane parmi les décalages comme décalage unique de la troisième image ; ou,
obtenir, pour chaque troisième image contenant les intersections de repères, le décalage respectif de chacun des intersections de repères dans la troisième image, trier les décalages en fonction de la longueur vectorielle des décalages, et sélectionner un décalage à la position de tri prédéfinie comme décalage unique de la troisième image.

13. Système de séquençage de gènes selon la revendication 9, **caractérisé en ce que** le module de génération d'images assemblées est en outre configuré pour utiliser une méthode d'ajustement par le plus proche voisin afin d'ajuster les coordonnées de la troisième image sans intersections de repères, dans lequel la méthode d'ajustement par le plus proche voisin comprend :
pour chaque troisième image sans intersections de repères, l'ajustement des coordonnées de la troisième image sans intersections de repères en fonction du décalage unique d'une troisième image contenant des intersections de repères, ainsi qu'en fonction du décalage et du chevauchement entre la troisième image sans intersections de repères et la troisième image contenant des intersections de repères ; dans lequel la troisième image contenant des intersections de repères est la plus proche de la troisième image sans intersections de repères.

14. Dispositif informatique, comprenant une mémoire et un processeur, dans lequel la mémoire stocke un programme informatique, et le processeur est configuré pour mettre en œuvre la méthode d'assemblage d'images selon l'une quelconque des revendications 1 à 8 lors de l'exécution du programme informatique.
